# EUROPÄISCHE PATENTSCHRIFT

(11) **EP 1 197 696 B1**
(45) Veröffentlichungstag und Bekanntmachung des Hinweises auf die Patenterteilung: **13.08.2003**
(21) Anmeldenummer: 01120533.3
(22) Anmeldetag: 29.08.2001
(51) Int. Cl.: F16K 31/22

(54) **Absperrvorrichtung**
Shut - off device
Installation de fermeture

(30) Priorität: 13.10.2000 DE 20017580 U
(43) Veröffentlichungstag der Anmeldung: 17.04.2002
(73) Patentinhaber: Techem Service Aktiengesellschaft & Co. KG, 60525 Frankfurt am Main (DE)
(72) Erfinder: Leblang, Lars, 64287 Darmstadt (DE)
(74) Vertreter: KEIL & SCHAAFHAUSEN

(56) Entgegenhaltungen:
- EP-A- 0 957 301
- EP-A- 1 024 253
- WO-A-93/02305
- WO-A-99/27283
- DE-A- 2 734 626
- FR-A- 2 640 020
- US-A- 5 893 389
- US-A- 6 092 781

## Beschreibung

Die Erfindung betrifft eine Absperrvorrichtung für Fluidleitungen mit einem Gehäuse mit zwei Leitungsanschlüssen und mit einem in dem Gehäuse aufgenommenen Schwimmer, der mittels einer Verstelleinrichtung in dem Gehäuse in wenigstens eine Richtung verschiebbar ist, wobei in dem Gehäuse an dem stromabwärts gelegenen Leitungsanschluss ein Ventilsitz ausgebildet ist, auf dem der Ventilsitz aufsetzbar ist, wobei der Schwimmer und der Ventilsitz jeweils einen einander zugewandten eine Dichtfläche bildenden konischen Bereich mit im Wesentlichen gleichem Konuswinkel aufweisen.

Wohnungswasserzähler werden häufig auf das Wohnungsabsperrventil montiert, wobei ein Anschlussstück des Zählers sowohl das Absperren des Wohnungsanschtusses als auch die Sicherstellung der Zu- und Abfuhr des Wassers zu bzw. von dem Zähler übernimmt,. Das Absperren wird im Allgemeinen durch mechanisches Schließen des sogenannten Ventilrohres erreicht. Da der Schließvorgang gegen den Wasserdruck des Zulaufs arbeitet, können bei fehlendem Anpressdruck Leckagen entstehen. Bei Verkalkung der Absperrspindel lässt sich das Rohr ggf. gar nicht mehr absperren.

Aus der DE 199 39 613 A1 ist ein Absperrventil für Vakuumverarbeitungssysteme bekannt. In dem Gehäuse sind zwei Anschlüsse orthogonal zueinander angeordnet. Einer der beiden Anschlüsse ist als ein Ventilsitz ausgebildet, auf dem ein ebener Stempel aufsitzt, um das Ventil zu schließen. Der Stempel wird mit Hilfe einer starr mit diesem verbundenen Betätigungsvorrichtung über einen Ventilschaft betätigt. Durch die Saugwirkung einer mechanischen Pumpe wird Vakuum erzeugt, das das Ventil im geschlossenen Zustand hält und nicht versucht, es zu öffnen. Die Ausrichtung des Stempels auf dem Ventilsitz kann jedoch in Abhängigkeit der Strömungsverhältnisse in dem Gehäuse schwierig sein. So ist es möglich, dass der Stempel sich gegenüber dem Ventilsitz schräg stellt oder verschiebt, so dass er nicht vollständig auf dem Ventilsitz aufliegt und das Absperrventil daher nur unzureichend abdichtet.

In der FR 2 640 020 ist ein Absperrventil offenbart, welches über eine starr mit einem Ventilkörper verbundene Ventilspindel betätigbar ist, um gegen einen Ventilsitz gezogen oder von diesem abgehoben zu werden. Der Ventilkörper und der Ventilsitz weisen dabei einander zugewandte konische Bereiche auf, die als Dichtflächen dienen. Da die Schließkraft bei diesem bekannten Absperrventil nur durch die Gewindespindel aufgebracht wird, kann es bei einer Verschmutzung der Dichtflächen zu einer unzureichenden Abdichtung des Ventils kommen.

Demgegenüber ist es eine Aufgabe der vorliegenden Erfindung eine Absperrvorrichtung bereitzustellen, die ein zuverlässiges Absperren einer Fluidleitung bei verbesserter Abdichtung ermöglicht.

Diese Aufgabe wird mit einer Absperrvorrichtung der eingangs genannten Art im Wesentlichen dadurch erreicht, dass der Schwimmer ein von der Verstelleinrichtung separater Hohlkörper ist. Je nach Einbaulage des Ventils bewirkt der Auftrieb des als Hohlkörper ausgebildeten Schwimmers, dass dieser abdichtend gegen den Ventilsitz beaufschlagt wird. Beim Verschließen der Absperrvorrichtung wird die konische Dichtfläche des Schwimmers auch durch den Fluiddruck auf den Ventilsitz gepresst, wenn die Verstelleinrichtung den Schwimmer nicht

in seiner das Ventil öffnenden Stellung hält. Der Schwimmer und der Ventilsitz richten sich dabei durch ihre konischen Flächen selbsttätig konzentrisch zueinander aus, so dass die Dichtflächen optimal aneinander anliegen. Durch die konische Ausbildung des Schwimmers und des Ventilsitzes wird zudem eine große Dichtfläche bereitgestellt, die ein zuverlässiges Absperren einer Fluidleitung ermöglicht. Zudem gewährleistet die Anordnung des Ventilsitzes auf der stromabwärts gelegenen Seite des Gehäuses auch bei großen Druckunterschieden zwischen den beiden Seiten des Schwimmers ein besonders zuverlässiges Abdichten der Absperrvorrichtung, da der Schwimmer mit steigender Druckdifferenz durch das Fluid fester gegen den Ventilsitz gepresst wird, so dass sich die Dichtwirkung erhöht. Im Falle der Demontage oder des Versagens der Öffnungsmechanik sorgt der wirkende Druck für das selbsttätige Schließen der Absperrung, da die Schließkraft nicht über eine mit dem Schwimmer einstückige Ventilspindel oder dgl. sondern über den Auftrieb des Schwimmers und/oder den Differenzdruck in der Fluidleitung aufgebracht wird. Das Öffnen der erfindungsgemäßen Absperrvorrichtung erfolgt gegen den Fluiddruck. Zudem weis der als Hohlkörper ausgebildete Schwimmer ein reduziertes Gewicht auf und lässt sich dadurch auch leichter betätigen.

Damit auch bei geringer Druckdifferenz und Strömungsgeschwindigkeit die Dichtflächen des Schwimmers und des Ventilsitzes mit ausreichender Kraft aufeinander gepresst werden und die Dichtwirkung gewährleistet ist, wird der Schwimmer über eine Feder, insbesondere eine sich an einen Absatz des Gehäuses abstützende Druckfeder in Richtung des Ventilsitzes vorgespannt.

Zur weiteren Steigerung der Dichtwirkung kann der konische Bereich des Ventilsitzes und /oder der konische Bereich des Schwimmers wenigstens teilweise mit einem Dichtungsmaterial versehen sein. Abhängig von dem abzusperrenden Fluids kann als Dichtungsmaterial bspw. eine Gummierung oder eine Auskleidung mit Polytetrafluorethylen (PTFE) vorgesehen werden.

Zusätzlich oder alternativ hierzu ist es auch möglich, einen Dichtungsring (O-Ring) in dem konischen Bereich des Ventilsitzes und/oder dem konischen Bereich des Schwimmers vorzusehen, um eine gute Dichtwirkung zu erzielen.

Um zu verhindern, dass der Schwimmer in geöffnetem Zustand der Absperrvorrichtung absinkt oder zu schwingen beginnt, kann der Schwimmer radiale Führungsstege aufweisen, die mit einer Spielpassung an der Gehäuseinnenwand anliegen. Diese können bspw. sternförmig an der der konischen Fläche des Schwimmers abgewandten Seite angeordnet sein. Insbesondere hat sich eine Anordnung von drei radialen Führungstegen, die um 120 ° versetzt am Umfang des Schwimmers angeordnet sind oder vier im 90 ° Winkel zueinander versetzten radialen Führungsstege als besonders geeignet erwiesen.

In Weiterbildung der Erfindung ist es vorgesehen, dass der Schwimmer einen an den konischer Bereich angrenzenden Schaft aufweist, der sich wenigstens bereichsweise aus dem stromabwärts gelegenen Leitungsanschluss des Gehäuses erstreckt. Über diesen Schaft kann der Schwimmer gegen die Kraft der Druckfeder und gegen den Fluiddruck mittels einer Verstelleinrichtung gelöst werden, so dass die Absperrvorrichtung geöffnet wird. Gleichzeitig dient der Schaft dazu, den Schwimmer konzentrisch in dem Gehäuse auszurichten, wenn der Schaft über die Verstelleinrichtung mechanisch geführt wird, so dass der konische Bereich des Schwimmers beim Schließen der Absperrvorrichtung dichtend an dem Ventilsitz anliegt.

Verwirbelungen und Strömungsturbulenzen innerhalb des Gehäuses können dadurch verringert werden, dass der Schwimmer auf seiner dem Schaft abgewandten Seite mit einer kegelförmigen Spitze ausgebildet ist. Bei geöffneter Absperrvorrichtung strömt das Fluid daher leicht an dem Schwimmer vorbei, so dass Druckverluste oder Geräusche durch Turbulenzen gemindert werden.

Nach einer bevorzugten Ausführungsform der Erfindung ist einer der Leitungsanschlüsse des Gehäuses mit einem Durchflusszähler verbunden. Die erfindungsgemäße Absperrvorrichtung wird somit zu einem Ventilzähler, der bspw. als Wohnungswasserzähler mit integriertem Wohnungsabsperrventil einsetzbar ist.

Die Erfindung wird nun anhand von Ausführungsformen und unter Bezugnahme auf die beigefügte Zeichnung näher erläutert.

Es zeigen:
- Fig. 1: eine erste Ausführungsform der Absperrvorrichtung im geöffneten Zustand,
- Fig. 2: eine zweite Ausführungsform der Absperrvorrichtung im geöffneten Zustand,
- Fig. 3: die Absperrvorrichtung aus Fig. 1 im geschlossenen Zustand und
- Fig. 4: die Absperrvorrichtung aus Fig. 2 im geschlossenen Zustand.

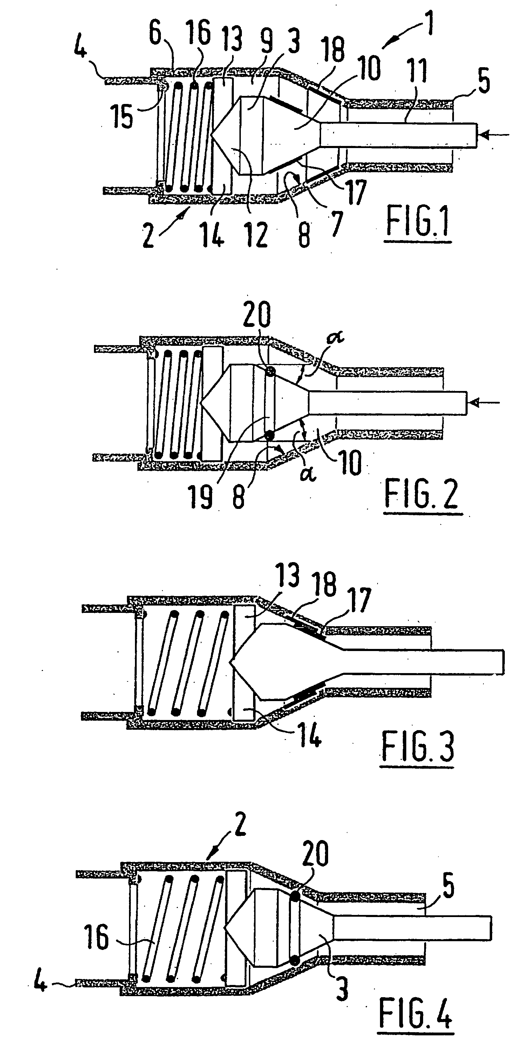

In den Figuren sind identische Komponenten der Absperrvorrichtung durchgängig mit den gleichen Bezugsziffern bezeichnet. Die in Fig. 1 dargestellte Absperrvorrichtung 1 weist ein Gehäuse 2 mit einem darin aufgenommenen Schwimmer 3 auf. An gegenüberliegenden Enden des Gehäuses 2 sind Leitungsanschlüsse 4 und 5 vorgesehen, über die das Gehäuse mit Fluidleitungen (nicht dargestellt) verbindbar ist.

Das Gehäuse weist einen ersten zylindrischen Bereich 6 mit gegenüber den Fluidleitungen vergrößertem Durchmesser auf. An diesen zylindrischen Bereich 6 schließt sich ein konischer Bereich 7 an, der als Ventilsitz 8 ausgebildet ist.

Der Schwimmer 3 ist als ein Hohlkörper ausgebildet, dessen Durchmesser so gewählt ist, dass zwischen dem Schwimmer 3 und dem Gehäuse 2 ein ringförmiger Kanal 9 entsteht, durch den ein Fluid von dem Leitungsanschluss 4 zu dem Leitungsanschluss 5 des Gehäuses 2 strömen kann. Auch der Schwimmer 3 ist mit einem konischen Bereich 10 ausgebildet, dessen in Fig. 2 dargestellter Konuswinkel α im Wesentlichen dem Konuswinkel des Ventilsitzes 8 des Gehäuses 2 entspricht. In Verlängerung der konischen Fläche 10 des Schwimmers 3 ist ein Schaft 11 ausgebildet, der sich bereichsweise aus dem Leitungsanschluss 5 des Gehäuses 2 herauserstreckt. Auf der dem Schaft 11 gegenüberliegenden Seite weist der Schwimmer 3 eine kegelförmige Spitze 12 auf, an der mehrere radiale Führungsstege 13, 14 angeordnet sind.

Zwischen einem Absatz 15 des Gehäuses 2 und den radialen Führungsstegen 13, 14 des Schwimmers 3 ist eine Druckfeder 16 positioniert, die den Schwimmer 3 in Richtung des Ventilsitzes 8 vorspannt. Über eine nicht dargestellte Verstelleinrichtung, die an dem Schaft 11 des Schwimmers 3 angreift, kann dieser, wie in Figuren 1 und 2 durch einen Pfeil angedeutet, gegen die Kraft der Feder 16 verschoben werden. Die Verstelleinrichtung kann auch mechanisch mit dem Schaft 11 des Schwimmers 3 verbunden sein, um den Schwimmer 3 entgegen der Pfeilrichtung in den Figuren 1 und 2 in dem Gehäuse 2 zu verschieben.

In der in den Figuren 1 und 3 gezeigten ersten Ausführungsform ist der konische Bereich 10 des Schwimmers 3 mit einem Dichtungsmaterial 17 versehen. Gleichzeitig ist auch der Ventilsitz 8 des Gehäuses 2 wenigstens bereichsweise mit einem Dichtungsmaterial 18 ausgekleidet. Die Dichtungsmaterialien 17 und 18 des Schwimmers 3 bzw. des Gehäuses 2 sind dabei so positioniert, dass in dem in Fig. 3 dargestellten geschlossenen Zustand der Absperrvorrichtung 1 aneinander anliegen.

Nach der zweiten, in den Figuren 2 und 4 dargestellten Ausführungsform sind der Ventilsitz 8 und die konische Fläche 10 des Schwimmers 3 nicht mit einem Dichtungsmaterial ausgekleidet. Stattdessen ist in dem konischen Bereich 10 des Schwimmers 3 eine Nut 19 eingebracht, in der ein Dichtungsring 20 gehalten ist. Der Dichtungsring 20 liegt, wie in Fig. 4 gezeigt, im geschlossenen Zustand der Absperrvorrichtung 1 an dem Ventilsitz 8 des Gehäuses 2 an.

Im Folgenden wird nun die Funktionsweise der Absperrvorrichtung 1 erläutert.

Nach der Montage der Absperrvorrichtung 1 wird der konische Bereich 10 des Schwimmers 3 durch die Kraft der Feder 16 auf den Ventilsitz 8 des Gehäuses 2 gepresst. Wird nun eine Fluidquelle, wie bspw. ein Hauswasseranschluss, geöffnet, so strömt das Fluid durch die mit dem Leitungsanschluss 4 verbundene Fluidleitung in das Gehäuse 2 und drückt den Schwimmer 3 noch fester gegen den Ventilsitz 8. Die Fluidleitung ist damit auch ohne Einwirkung der Verstelleinrichtung vollständig abgedichtet.

Zum Öffnen der Absperrvorrichtung 1 wird die Verstelleinrichtung betätigt, die an dem Schaft 11 des Schwimmers 3 angreift. Der Schwimmer 3 wird dazu gegen den Druck des Fluids und gegen die Kraft der Druckfeder 16 axial in Richtung auf den Leitungsanschluss 4 hin verschoben. Dadurch wird der konische Bereich 10 des Schwimmers 3 von dem Ventilsitz 8 abgehoben und es entsteht ein ringförmiger Kanal 9 zwischen dem Schwimmer 3 und dem Ventilsitz 8. Das Fluid durchströmt dabei zunächst den Leitungsanschluss 4 und gelangt dann durch die Druckfeder 16 und zwischen den einzelnen radialen Führungsstegen 13, 14 hindurch in den ringförmigen Kanal 9, um das Gehäuse an dem Leitungsanschluss 5 zu verlassen.

Zum Schließen der Absperrvorrichtung 1 wird die Verstelleinrichtung in ihre Ausgangslage zurückbewegt, so dass der konische Bereich 10 des Schwimmers 3 durch den Fluiddruck und die Druckfeder 16 selbsttätig gegen den Ventilsitz 8 des Gehäuses 2 gepresst werden. Die Verstelleinrichtung kann dabei die axiale Bewegung des Schwimmers 3 unterstützen, falls dieser mechanisch mit der Verstelleinrichtung verbunden ist.

Vorzugsweise ist der Leitungsanschluss 5 mit einem Zähler, wie bspw. einem Wohnungswasserzähler verbunden. Die Einheit aus Absperrvorrichtung 1 und Zähler bildet dann einen sogenannten Ventilzähler.

### Bezugszeichenliste

- 1: Absperrvorrichtung
- 2: Gehäuse
- 3: Schwimmer
- 4: Leitungsanschluss
- 5: Leitungsanschluss
- 6: zylindrischer Bereich des Gehäuses 2
- 7: konischer Bereich des Gehäuses 2
- 8: Ventilsitz
- 9: ringförmiger Kanal
- 10: konischer Bereich des Schwimmers 3
- 11: Schaft
- 12: kegelförmige Spitze
- 13: radialer Führungssteg
- 14: radialer Führungssteg
- 15: Absatz
- 16: Feder
- 17: Dichtungsmaterial
- 18: Dichtungsmaterial
- 19: Nut
- 20: Dichtring

## Patentansprüche

1. Absperrvorrichtung für Fluidleitungen mit einem Gehäuse (2) mit zwei Leitungsanschlüssen (4, 5) und einem in dem Gehäuse (2) aufgenommenen Schwimmer (3), der mittels einer Verstelleinrichtung in dem Gehäuse (2) in wenigstens eine Richtung verschiebbar ist, wobei in dem Gehäuse (2) an dem stromabwärts gelegenen Leitungsanschluss (5) ein Ventilsitz (8) ausgebildet ist, auf dem der Schwimmer (3) aufsetzbar ist, wobei der Schwimmer (3) und der Ventilsitz (8) jeweils einen einander zugewandten eine Dichtfläche bildenden konischen Bereich (10, 7) mit im Wesentlichen gleichem Konuswinkel (α) aufweisen, **dadurch gekennzeichnet, dass** der Schwimmer (3) ein von der Verstelleinrichtung separater Hohlkörper ist.

2. Absperrvorrichtung nach Anspruch 1, **dadurch gekennzeichnet, dass** der Schwimmer (3) über eine Feder (16), insbesondere eine Druckfeder in Richtung des Ventilsitzes (8) vorgespannt wird.

3. Absperrvorrichtung nach Anspruch 2, **dadurch gekennzeichnet, dass** sich die Feder (16) auf einen Absatz (15) des Gehäuses (2) abstützt.

4. Absperrvorrichtung nach einem der vorangegangenen Ansprüche, **dadurch gekennzeichnet, dass** der konische Bereich (7) des Ventilsitzes (8) und/oder der konische Bereich (10) des Schwimmers (3) wenigstens teilweise mit einem Dichtungsmaterial (17, 18) versehen sind.

5. Absperrvorrichtung nach einem der vorangegangenen Ansprüche, **dadurch gekennzeichnet, dass** in dem konischen Bereich (7) des Ventilsitzes (8) und/oder dem konischen Bereich (10) des Schwimmers (3) wenigstens ein Dichtungsring (20) vorgesehen ist.

6. Absperrvorrichtung nach einem der vorangegangenen Ansprüche, **dadurch gekennzeichnet, dass** der Schwimmer (3) radiale Führungsstege (13, 14) aufweist, die mit einer Spielpassung an der Innenwand des Gehäuses (2) anliegen.

7. Absperrvorrichtung nach einem der vorangegangenen Ansprüche, **dadurch gekennzeichnet, dass** der Schwimmer (3) einen an den konischen Bereich (10) angrenzenden Schaft (11) aufweist, der sich wenigstens bereichsweise aus dem stromabwärts gelegenen Leitungsanschluss (5) des Gehäuses (2) heraus erstreckt.

8. Absperrvorrichtung nach Anspruch 7, **dadurch gekennzeichnet, dass** der Schwimmer (3) auf seiner dem Schaft (11) abgewandten Seite eine kegelförmige Spitze (12) aufweist.

9. Absperrvorrichtung nach einem der vorangegangenen Ansprüche, **dadurch gekennzeichnet, dass** einer der Leitungsanschlüsse (4, 5) des Gehäuses (2) mit einem Durchflusszähler verbunden ist.

## Claims

1. Shutoff device for fluid lines with a housing (2) having two line connections (4, 5) and a float (3) which is accommodated in the housing (2) and can be displaced in at least one direction by means of an adjustment device, wherein a valve seat (8) is formed in the housing (2) at the downstream line connection (5), on which seat the float (3) can be placed, wherein the float (3) and the valve seat (8) each comprise a mutually facing conical region (10, 7) forming a sealing face and having substantially the same cone angle (α), **characterised in that** the float (3) is a hollow body which is separate from the adjustment device.

2. Shutoff device according to Claim 1, **characterised in that** the float (3) is preloaded by a spring (16), in particular a compression spring, in the direction of the valve seat (8).

3. Shutoff device according to Claim 2, **characterised in that** the spring (16) is supported on a shoulder (15) of the housing (2).

4. Shutoff device according to any one of the preceding Claims, **characterised in that** the conical region (7) of the valve seat (8) and/or the conical region (10) of the float (3) are/is provided at least in part with a sealing material (17, 18).

5. Shutoff device according to any one of the preceding Claims, **characterised in that** at least one sealing ring (20) is provided in the conical region (7) of the valve seat (8) and/or the conical region (10) of the float (3).

6. Shutoff device according to any one of the preceding Claims, **characterised in that** the float (3) comprises radial guide fins (13, 14) which lie with a loose fit against the inner wall of the housing (2).

7. Shutoff device according to any one of the preceding Claims, **characterised in that** the float (3) comprises a shaft (11) which adjoins the conical region (10) and extends at least in certain regions out of the downstream line connection (5) of the housing (2).

8. Shutoff device according to Claim 7, **characterised in that** the float (3) comprises a conical tip (12) on its side which is remote from the shaft (11).

9. Shutoff device according to any one of the preceding Claims, **characterised in that** one of the line connections (4, 5) of the housing (2) is connected to a flowmeter.

## Revendications

1. Dispositif d'obturation pour des conduites de fluide, avec un boîtier (2) ayant deux raccords de conduite (4, 5) et un flotteur (3) logé dans le boîtier (3) et qui peut être déplacé dans le boîtier au moins dans une direction au moyen d'un dispositif de réglage, un siège de valve (8) étant formé dans le boîtier (2) sur le raccord de conduite (5) situé en aval et sur lequel le flotteur peut être posé, le flotteur (3) et le siège de valve (8) étant muni chacun d'un domaine conique (10, 7) formant une surface d'étanchéité, dirigé l'un vers l'autre, lesdits domaines coniques ayant essentiellement le même angle de cône (α), **caractérisé en ce que** le flotteur (3) est un corps creux séparé du dispositif de réglage.

2. Dispositif d'obturation selon la revendication 1, **caractérisé en ce que** le flotteur (3) est précontraint à l'aide d'un ressort (16), notamment un ressort de pression, en direction du siège de valve (8).

3. Dispositif d'obturation selon la revendication 2, **caractérisé en ce que** le ressort (16) prend appui sur un épaulement (15).

4. Dispositif d'obturation selon l'une des revendications précédentes, **caractérisé en ce que** le domaine conique (7) du siège de valve (8) et / ou le domaine conique (10) du flotteur (3) sont munis au moins en partie d'un matériau d'étanchéité.

5. Dispositif d'obturation selon l'une des revendications précédentes, **caractérisé en ce qu'**une bague d'étanchéité (20) est prévue dans le domaine conique (7) du siège de valve (8) et / ou dans le domaine conique (10) du flotteur (3).

6. Dispositif d'obturation selon l'une des revendications précédentes, **caractérisé en ce que** le flotteur (3) est muni de tiges de guidage (13, 14) radiales qui sont placées contre la paroi interne du boîtier (2) avec un ajustement avec jeu.

7. Dispositif d'obturation selon l'une des revendications précédentes, **caractérisé en ce que** le flotteur (3) est muni d'une queue (11) limitrophe au domaine conique (10) qui s'étend au moins en partie hors du raccord de conduite (5) aval du boîtier (2).

8. Dispositif d'obturation selon la revendication 7, **caractérisé en ce que** le flotteur (3) présente sur son côté dirigé vers la queue (11) une pointe conique (12).

9. Dispositif d'obturation selon l'une des revendications précédentes, **caractérisé en ce que** l'un des raccords de conduite (4, 5) du boîtier (2) est raccordé à un compteur volumétrique.
